# EUROPÄISCHE PATENTSCHRIFT

(11) **EP 0 406 172 B1**
(45) Veröffentlichungstag und Bekanntmachung des Hinweises auf die Patenterteilung: **08.03.1995**
(21) Anmeldenummer: 90810466.4
(22) Anmeldetag: 21.06.1990
(51) Int. Cl.: B29C 65/64

(54) **Vorrichtung zum Aufbringen einer weichelastischen Schicht auf Walzen für graphische Maschinen**
Apparatus for mounting of a soft-elastic layer on rolls of graphic machines
Dispositif pour appliquer une couche élastique molle sur des rouleaux de machines graphiques

(30) Priorität: 27.06.1989 DE 3921037
(43) Veröffentlichungstag der Anmeldung: 02.01.1991
(73) Patentinhaber: Maschinenfabrik Wifag, CH-3001 Bern (CH)
(72) Erfinder: Ammon, Ernst, CH-3012 Bern (CH); Langsch, Robert, CH-3052 Zollikofen (CH)

(56) Entgegenhaltungen:
- DE-A- 1 753 626
- DE-A- 2 219 851
- DE-A- 2 515 682
- US-A- 1 801 396
- US-A- 4 662 045

## Beschreibung

Die Erfindung betrifft ein Verfahren zum Aufbringen einer weichelastischen Schicht auf Walzen, die in graphischen Maschinen wie Druckmaschinen oder Beschichtungsmaschinen verwendet werden, nach dem Oberbegriff des Anspruchs 1 sowie eine Vorrichtung zur Durchführung des Verfahrens.

Derartige Walzen werden beispielsweise in Druckmaschinen als Uebertragungs- und Auftragswalzen in Farb- und Feuchtwerken eingesetzt. Sie müssen, da sie als Verbindungswalzen zwischen Walzen mit harter Oberfläche dienen, eine weichelastische Oberfläche aufweisen. Des weiteren muss ihre Oberfläche so beschaffen sein, dass sie die entsprechenden Medien problemlos übertragen können.

Die Walzen werden normalerweise durch Aufvulkanisation einer weichelastischen Schicht auf einen rohrförmigen Stahlkörper hergestellt. In den meisten Fällen besteht das aufvulkanisierte Material aus einer Gummimischung. Die aufvulkanisierte Gummischicht wird dann auf das erforderliche Mass geschliffen.

Derartige Walzen erreichen erst nach einer längeren Alterungszeit der Gummischicht eine praktisch konstante Masshaltigkeit. Insbesondere bei auszuwechselnden Walzen, die oftmals neu hergestellt werden müssen, ergibt der sofortige Einsatz infolge der sich veränderten Abmessungen Probleme.

Derartige Walzen erreichen erst nach einer längeren Alterungszeit der Gummischicht eine praktisch konstante Masshaltigkeit. Insbesondere bei auszuwechselnden Walzen, die oftmals neu hergestellt werden müssen, ergibt der saofortige Einsatz infolge der sich veränderten Abmessungen Probleme.

Derartige Walzen müssen ständig neu einjustiert werden. Das Aufvulkanisieren der Gummischicht ist speziell für auszuwechselnde Walzen sehr aufwendig und teuer, da dies meistens Einzerlanfertigungen oder Anfertigungen geringer Stückzahl sind. Auch ist erforderlich, das Tragrohr wegen der dabei auftretenden Temperaturen aus einem metallischen Werkstoff zu fertigen. Tragrohre aus kohlenstofffaserverstärktem Kunststoff zur Erhöhung der Stabilität und zur Verringerung des gewichts sind nicht geeignet.

Aus der DE-A-25 15 682 ist eine Vorrichtung zum Aufbringen elastischer Bezüge auf Walzen gemäß Oberbegriff des Anspruchs 1 bekannt. Dabei wird ein in seinem Durchmesser veränderlicher Blähkörper verwendet, auf den ein Gummibezug für eine Walze aufgeschoben wird. Der Blähkörper wird anschliessend mit Druck beaufschlagt, so dass der Gummibezug in seinem Aussendurchmesser gedehnt wird. Anschliessend wird ein Tragrohr in den Gummibezug eingeschoben, wobei der Blähkörper zurückgezogen und entspannt wird. Da der Gummibezug nur einen unwesentlich geringeren Innendurchmesser hat als der Aussendurchmesser der Tragwalze, herrscht zwischen dem Gummibezug und der Tragwalze keine sonderlich feste Verbindung, so dass insbesondere bei hohen Umlaufgeschwindigkeiten der Tragwalze einschliesslich dem Gummibezug Probleme auftreten können. Andererseits kann es beim Auftragen des Gummibezuges mit diesem Verfahren grosse Probleme geben, falls der Gummibezug einen geringen Innendurchmesser hat und deshalb über den Blähkörper stark aufgeweitet werden muss, um ihn anschliessend unter gleichzeitiger Herausziehung des Blähkörpers auf den Tragkörper aufzuschieben. Der dabei entstehende Anpressdruck zwischen dem Gummikörper und dem Tragrohr könnte zu derart hohen Reibungswiderständen führen, dass ein kontrolliertes Aufschieben des Gummikörpers ohne eine Beschädigung des Gummikörpers kaum möghlich wäre.

Der Erfindung liegt die Aufgabe zugrunde, eine Vorrichtung zu schaffen, mit welcher auf einfache, zeitsparende und billige Art Walzen mit einer weichelastischen Schicht ausgerüstet werden können, die sofort einsetzbar sind.

Erfindungsgemäss erfolgt die Lösung der Aufgabe durch eine Vorrichtung mitden Merkmalen des Anspruches 1.

Mit dieser Vorrichtung ist es möglich, den schlauchförmigen weichelastischen Körper derart auf das Tragrohr aufzuziehen, dass er vorgespannt ist, wodurch in bestimmten Fällen auf eine Klebung verzichtet werden kann.

Vorteilhafte Ausgestaltungen der Vorrichtung ergeben sich aus den weiteren Ansprüchen.

Sehr einfach wird die Handhabung, wenn das Stützrohr einseitig mit einem Deckel verschlossen ist, welcher mittig mit einem axialen Gewindeloch versehen ist. In dieses Gewindeloch ist das Uebergangsstück einschraubbar. Das Tragrohr wiird ebenfalls beidseitig mit Deckeln abgeschlossen, die ihrerseits zentral angeordnete, axiale Gewindelöcher aufweisen. So lässt sich das Tragrohr ebenfalls auf das Uebergangsstück aufschrauben.

Auf den dem Uebergangsstück gegenüberliegenden Deckel lässt sich ein Druckluftanschluss einschrauben. Die Druckluftzuführung erfolgt dann durch das Tragrohr in das Uebergangsstück. Durch Oeffnungen, die im Uebergangsstück vorzugsweise im Bereich der Verbindungsstelle mit dem Tragrohr angeordnet sind, strömt die Druckluft aus und bildet unter dem aufzuschiebenden schlauchförmigen weichelastischen Körper ein Luftkissen.

Die Erfindung wird nachfolgend anhand eines Ausführungsbeipiels näher erläutert.

Es zeigen:

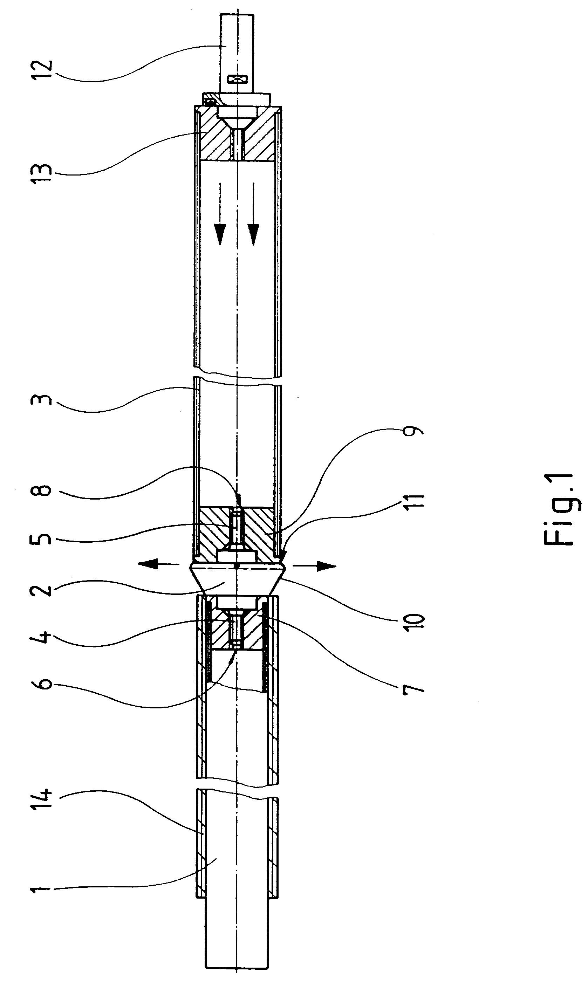

- Fig. 1: eine Ansicht der Anordnung zum Aufziehen des schlauchförmigen weichelastischen Körpers, welcher sich noch auf dem Stützrohr befindet
- Fig. 2: eine Ansicht der Anordnung, in welcher der schlauchförmigen weichelastische Körper aufgezogen wird
- Fig. 3: eine Ansicht der Anordnung mit fertig aufgezogenem schlauchförmigen weichelastischen Körper
- Fig. 4: eine Ansicht des Uebergangsstückes
- Fig. 5: eine Draufsicht auf das Uebergangsstück
- Fig. 6: eine Ansicht der fertigen Walze
Wie aus Fig. 1 ersichtlich ist, werden ein Stützrohr 1, ein Uebergangsstück 2 und ein Tragrohr 3 axial miteinander verschraubt. Hierbei ist das Uebergangsstück 2 beidseitig mit je einem Gewindezapfen 4, 5 ausgerüstet.

Gewindezapfen 4 passt dabei in ein Gewindeloch 6, welches in einem Deckel 7 eingelassen ist, der das Stützrohr 1 abschliesst, während der Gewindezapfen 5 in ein Gewindeloch 8 eingeschraubt ist, das im Deckel 9 eingelassen ist, welcher das Tragrohr 3 abschliesst.

Das Uebergangsstück 2 weist eine konische Oberfläche 10 auf, die die Durchmesservergrösserung von Stützrohr 1 auf Tragrohr 3 überbrückt. Im Bereich der Verbindungsstelle 11 zwischen Uebergangsstück 2 und Tragrohr 3 strömt Druckluft aus, die über ein Druckluftanschlussstück 12, das in den Deckel 13 eingeschraubt ist, welcher das Tragrohr 3 auf der anderen Seite abschliesst, und das Tragrohr 3 zugeführt wird. Der schlauchförmige weichelastische Körper 14 ist auf das Stützrohr 1 aufgeschoben. Der Aussendurchmesser des Stützrohres 1 ist kleiner als der kleinste tolerierbare Innendurchmesser des schlauchförmigen weichelastischen Körpers 14.

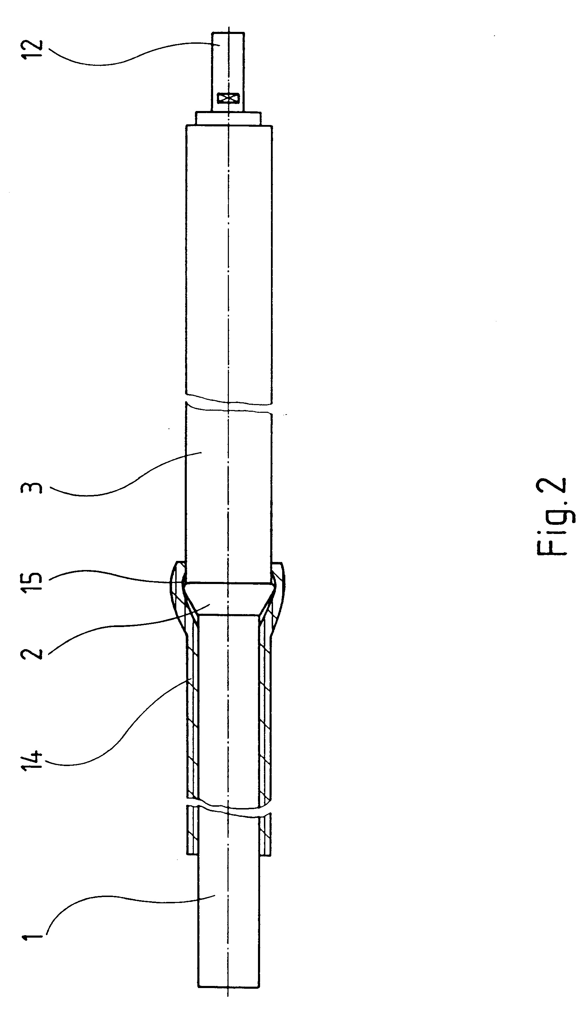

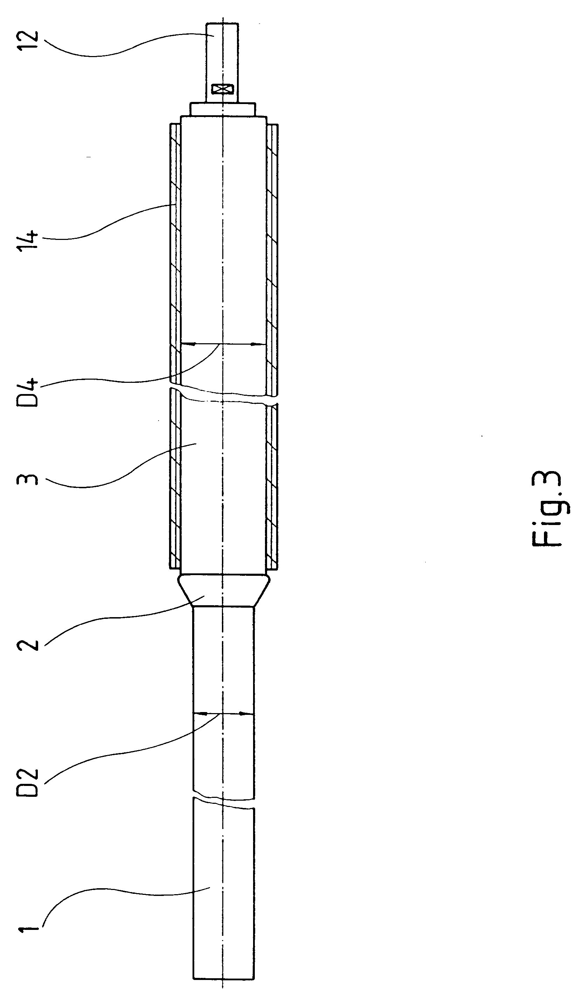

Der schlauchförmige weichelastische Körper 14 wird nun über die konische Oberfläche 10 des Uebergangsstückes 2 in Richtung Tragrohr 3 geschoben, wie es in Fig. 2 dargestellt ist. Sobald der Anfang des schlauchförmigen weichelastischen Körpers 14 über die Verbindungsstelle 11 geschoben ist, bildet sich durch die ausströmende Druckluft zwischen dem schlauchförmigen weichelastischen Körper 14 und dem Tragrohr 3 ein Luftkissen 15. Dieses Luftkissen 15 ermöglicht ein problemloses und vollständiges Aufziehen des schlauchförmigen weichelastischen Körpers 14 auf das Tragrohr 3, wie es Fig. 3 aufzeigt. Der Aussendurchmesser des Tragrohres 3 ist hierbei grösser als der grösste tolerierbare Innendurchmesser des schlauchförmigen weichelastischen Körpers 14, sodass der auf das Tragrohr 3 aufgezogene schlauchförmige weichelastische Körper 14 immer unter einer gewissen Vorspannung steht.

Normalerweise wird das Tragrohr 3 vor dem Aufziehen des schlauchförmigen weichelastischen Körpers 14 mit einem Klebemittel beschichtet. Auch hierbei bietet das Aufziehen des schlauchförmigen weichelastischen Körpers 14 wegen des sich aufbauenden Luftkissens 15 keine Probleme. Und da nach Ausschalten der Druckluftquelle sich der schlauchförmige weichelastische Körper 14 durch seine Vorspannung zusammenzieht, ist zum Aushärten des Klebemittels kein zusätzliches Anpressen erforderlich, die Haftung wird optimal.

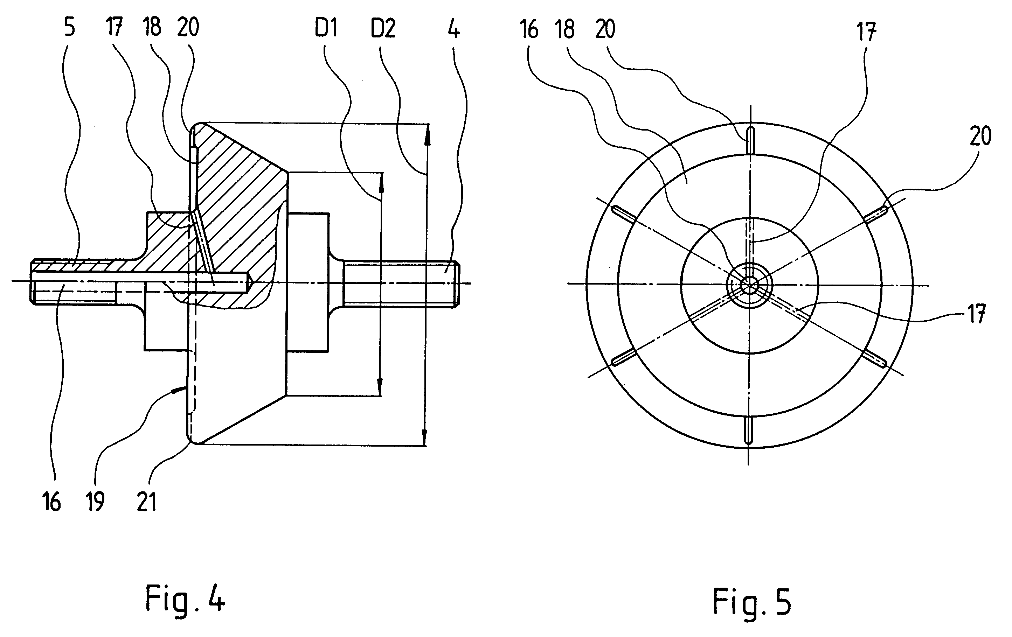

Fig. 4 und Fig. 5 zeigen das Uebergangsstück 2. Beidseitig der konischen Oberfläche 10 sind die Gewindezapfen 4 und 5 angeordnet. Der Gewindezapfen 5, der in den Deckel 9 des Tragrohres 3 eingeschraubt wird, weist im Zentrum eine axiale Bohrung 16 auf. In diese Bohrung 16 münden praktisch radial angebrachte Löcher 17, die die Bohrung 16 mit einem Ringkanal 18 verbinden. Dieser Ringkanal 18 ist in die stirnseitige Fläche 19 der konischen Oberfläche 10 mit dem grossen Durchmesser ums Zentrum eingelassen. Radial angeordnete Nuten 20 dienen als Durchlass für die Druckluft, die durch das Tragrohr 3 eingebracht wird, zum Ausströmen im Bereich der Verbindungsstelle 11 zwischen Uebergangsstück 2 und Tragrohr 3.

Die konische Oberfläche 10 weist an ihrer dicksten Stelle, die mit dem Tragrohr 3 in Verbindung kommt, einen grösseren Durchmesser auf, als das Tragrohr 3 selbst. Dieser mit einer Abrundung 21 versehene, über das Tragrohr 3 vorstehende Bereich dient quasi als Dichtung für die Druckluft, damit sie nicht in Richtung des Stützrohres 1 unter dem aufzuziehenden schlauchförmigen weichelastischen Körper 14 wegfliessen kann.

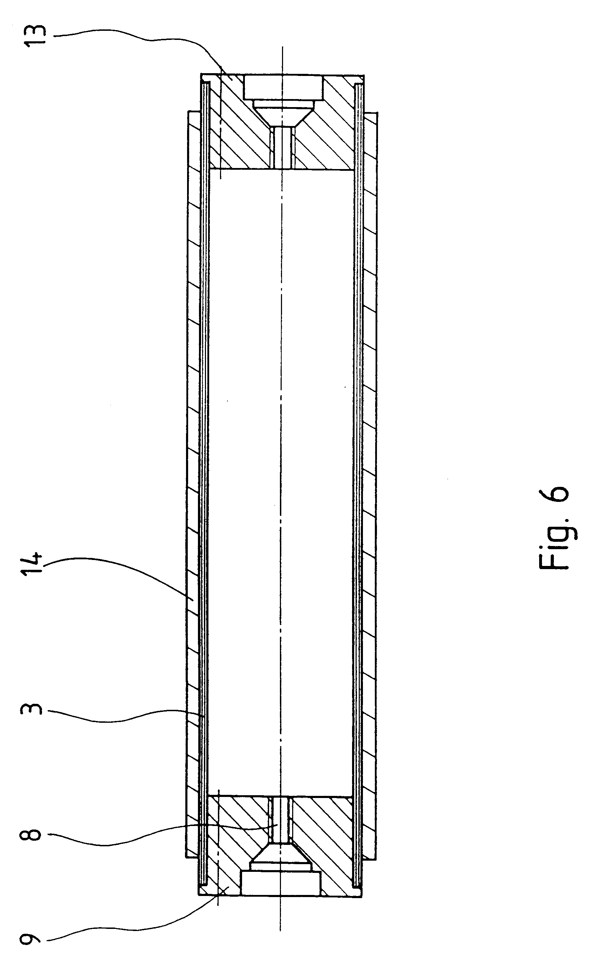

Fig. 6 zeigt die fertige Walze. Als Tragrohr 3 werden handelsübliche Präzisionsrohre verwendet, die ausser Ablängen keine weiteren Arbeitsschritte erforderlich machen. Die Deckel 9 und 13 werden eingepresst. Der schlauchförmige weichelastische Körper 14 wird auf den gewünschten Durchmesser abgeschliffen.

Das Tragrohr 3 kann aus einem praktisch beliebigen Material bestehen, das die erforderliche Festigkeit aufweist. Durch das Wegfallen der Aufvulkanisierung einer Gummischicht ist man nicht an Rohre aus Stahl gebunden.

## Patentansprüche

1. Vorrichtung zum Aufbringen einer weichelastischen Schicht auf Walzen, die in graphischen Maschinen, wie Druckmaschinen oder Beschichtungsmaschinen, verwendet werden, wobei die Walzen aus einem formstabilen Tragrohr (3) bestehen, das mit einem aus einem weichelastischen Material bestehenden schlauchförmigen Körper (14), der vor dem Beschichten auf eine Länge gebracht ist, die der Walzenbreite entspricht, zu umschließen ist, und wobei das Tragrohr (3) zur Aufnahme von Lagerzapfen beidseitig mit Deckeln (9, 13) abschließt; eine Vorrichtung mit
a) einem Uebergangsstück (2), mit endseitig zulaufendem Durchmesser, über das der schlauchförmige Körper (14) auf das Tragrohr (3) aufgeschoben wird;
b) einem Druckluftanschluß (12), zum Aufbauen eines Luftkissens zwischen zumindest Teilen des Uebergangsstücks (2), des Tragrohres (3) und des schlauchförmigen Körpers (14);
c) einem Stützteil (1), von dem der schlauchförmig Körper (14) auf das Tragrohr (3) übertragen wird, wobei das Stützteil (1), das Uebergangsstück (2) und das Tragrohr (3) im wesentlichen axial verbunden sind,
**gekennzeichnet** durch die folgenden Merkmale:
d) der Stützte ist als formstabiles Stützrohr (1) ausgebildet;
e) das Uebergangsstück (2) weist eine konische Oberfläche (10) auf, deren kleiner Durchmesser (D1) dem Durchmesser (D2) des Stützrohres (1) entspricht und deren grosser Durchmesser (D3) geringfügig grösser ist als der Durchmesser (D4) des Tragrohres (3);
f) der Druckluftanschluss (12) endet im Bereich einer Verbindungsstelle (11) zwischen dem Uebergangsstück (2) und dem Tragrohr (3);
g) der Aussendurchmesser des Stützrohrs (1) ist kleiner als der kleinste tolerierbare Innendurchmesser des schlauchförmigen Körpers (14).

2. Vorrichtung nach Anspruch 1, dadurch gekennzeichnet, daß das Uebergangsstück (2) beidseitig axiale Gewindezapfen (4, 5) aufweist, und das Stützrohr (1) und Tragrohr (3) mindestens an einem Ende mit einem Deckel (7) bzw. (9) verschlossen sind, die je ein dem Gewindezapfen (4, 5) entsprechendes Gewindeloch (6) bzw. (8) aufweisen.

3. Vorrichtung nach einem der Ansprüche 1 oder 2, dadurch gekennzeichnet, daß das Uebergangsstück (2) an der stirnseitigen Fläche (19) der konischen Oberfläche (10) mit den grossen Durchmesser einen Ringkanal (18) aufweist, welcher über Löcher (17) mit einer axial im Gewindezapfen (4) angeordneten Bohrung (16) verbunden ist, und daß vom Ringkanal (18) aus nutenförmige Kanäle (20) radial angebracht sind.

4. Vorrichtung nach einem der Ansprüche 1 bis 3 dadurch gekennzeichnet, daß ein Druckluftanschlußstück (12) in den Deckel (13) des Tragrohrs (3) einschraubbar ist und daß die Druckluft durch das Tragrohr (3) in das Uebergangsstück (2) gelangt.

5. Vorrichtung nach einem der Ansprüche 1 bis 4, dadurch gekennzeichnet, daß das Tragrohr (3) vor dem Aufschieben des schlauchförmigen Körpers (14) mit einem Klebemittel beschichtet worden ist.

## Claims

1. A device for applying a soft-elastic layer to rollers which are used in graphic machines such as printing machines or coating machines, the rollers being formed by an inherently stable support tube (3), which is to be enveloped by a hose-like element (14) made of a soft-elastic material, which is to be cut prior to covering to a length corresponding to the roller width, and the support tube (3) being sealed at both ends by lids (9, 13) in order to accommodate bearing journals; a device with
a) a transition element (2) having a diameter converging towards one end, over which transition element the hose-like element (14) is pushed on to the support tube (3);
b) a compressed air connection (12), for forming an air cushion between at least parts of the transition element (2), the support tube (3) and the hose-like element (14);
c) a carrier element (1), from which the hose-like element (14) is transferred to the support tube (3), the carrier element (1), the transition element (2) and the support tube (3) being connected to one another substantially axially,
characterised by the following features:
d) the carrier element is constructed as an inherently stable carrier tube (1);
e) the transition element (2) comprises a conical surface (10), whose smaller diameter (D1) corresponds to the diameter (D2) of the carrier tube (1) and whose larger diameter (D3) is slightly greater than the diameter (D4) of the support tube (3);
f) the compressed air connection (12) ends in the region of a connection site (11) between the transition element (2) and the support tube (3);
g) the external diameter of the carrier tube (1) is smaller than the smallest tolerable internal diameter of the hose-like element (14).

2. A device according to claim 1, characterised in that the transition element (2) comprises threaded journals (4, 5) at either end, and the carrier tube (1) and support tube (3) are sealed at least at one end by a lid (7) or (9) which comprises a threaded bore (6) or (8) corresponding to the respective threaded journal (4, 5).

3. A device according to one of claims 1 or 2, characterised in that the transition element (2) comprises an annular duct (18) on the end face (19) of the conical surface (10) with the greater diameter, which annular duct is connected via apertures (17) to a bore (16) arranged axially in the threaded journal (4), and groove-shaped ducts (20) extend radially outwards from the annular duct (18).

4. A device according to one of claims 1 to 3, characterised in that a compressed air connection element (12) can be screwed into the lid (13) of the support tube (3) and the compressed air passes through the support tube (3) into the transition element (2).

5. A device according to one of claims 1 to 4, characterised in that the support tube (3) is coated with an adhesive prior to the fitting of the hose-like element (14).

## Revendications

1. Dispositif pour appliquer une couche élastique molle sur des rouleaux qui sont utilisés sur des machines graphiques, telles que des presses d'imprimerie ou des machines d'enduction, ces rouleaux étant constitués par un tube support rigide (3) qu'il s'agit de garnir d'une gaine tubulaire (14) de matière élastique molle mise en longueur avant application à une cote qui correspond à la largeur du rouleau, le tube support (3) étant fermé à ses deux extrémités par des couvercles (9, 13) adaptés à recevoir des tourillons de pivotement, le dispositif comportant :
a) une pièce de transition (2) dont le diamètre varie d'une extrémité à l'autre, et sur laquelle on fait glisser la gaine tubulaire (14) pour l'enfiler sur son tube support (3);
b) un raccord d'arrivée d'air comprimé (12) permettant d'établir un coussin d'air entre la gaine tubulaire (14) et au moins certaines parties de la pièce de transition (2) ainsi que le tube support (3) ;
c) une pièce de soutien provisoire (1) sur laquelle on prend la gaine tubulaire (14) pour la faire passer sur le tube support (3), cette pièce de soutien (1) étant assemblée à peu près axialement avec la pièce de transition (2) et le tube support (3) ;
caractérisé par les particularités suivantes :
d) la pièce de soutien est constituée par un tube de soutien rigide (1) ;
e) la pièce de transition (2) présente une surface conique (10) dont le petit diamètre (D1) correspond au diamètre (D2) du tube de soutien (1), et dont le grand diamètre (D3) est légèrement plus fort que le diamètre (D4) du tube support (3) ;
f) le raccord d'arrivée d'air comprimé (12) communique avec un passage qui aboutit à l'endroit d'un raccordement (11) entre la pièce de transition (2) et le tube support (3) ;
g) le diamètre extérieur du tube de soutien (1) est plus faible que le diamètre intérieur minimum admis en fabrication pour la gaine tubulaire (14).

2. Dispositif selon la revendication 1, caractérisé en ce que la pièce de transition comporte sur chacune de ses deux faces latérales un doigt d'assemblage axial fileté (4,5), et en ce que le tube de soutien (1) et le tube support (3) ont au moins l'une de leurs extrémités fermée par un couvercle (7), (9) pourvu d'un trou taraudé (6), (8) adapté à recevoir l'un des doigts filetés d'assemblage (4,5).

3. Dispositif selon l'une des revendications 1 ou 2, caractérisé en ce que la pièce de transition (2), sur sa face latérale (19) située du côté du grand diamètre de la surface conique (10), présente un canal annulaire (18) qui communique par des trous de liaison (17) avec un alésage axial (16) prévu dans le doigt d'assemblage fileté (4), des rainures radiales de sortie (20) étant ménagées sur le canal annulaire (18).

4. Dispositif selon l'une des revendications 1 à 3, caractérisé en ce qu'il comporte un raccord d'alimentation en air comprimé (12) prévu pour se visser dans le couvercle (13) du tube support (3), et en ce que l'air comprimé passe dans le tube support (3) pour aboutir à la pièce de transition (2).

5. Dispositif selon l'une des revendications 1 à 4, caractérisé en ce que le tube support (3) a reçu une couche d'adhésif avant qu'on enfile la gaine tubulaire (14) sur le tube support (3).
